# EUROPEAN PATENT SPECIFICATION

(11) **EP 4 517 122 B1**
(45) Date of publication and mention of the grant of the patent: **05.08.2026**
(21) Application number: 23796316.0
(22) Date of filing: 24.04.2023
(51) Int. Cl.: F16C 33/42, F16C 33/44, F16B 19/06, F16C 19/06, F16B 5/04

(54) **BALL BEARING**
KUGELLAGER
ROULEMENT À BILLES

(30) Priority: 28.04.2022 JP 2022074456
(43) Date of publication of application: 05.03.2025
(73) Proprietor: NTN Corporation, Osaka-shi Osaka 530-0005 (JP)
(72) Inventor: KANBORI, Yasuhiro, Iwata-shi, Shizuoka 438-8510 (JP); HASHIZUME, Yuuki, Iwata-shi, Shizuoka 438-8510 (JP); SATO, Takufumi, Iwata-shi, Shizuoka 438-8510 (JP); MOCHIZUKI, Yuta, Iwata-shi, Shizuoka 438-8510 (JP)
(74) Representative: Grünecker Patent- und Rechtsanwälte PartG mbB
(86) International application number: PCT/JP2023/016107
(87) International publication number: WO 2023/210576

(56) References cited:
- WO-A1-2013/157543
- WO-A1-2014/208325
- WO-A1-2014/208325
- JP-A- 2005 240 915
- JP-A- 2005 240 915
- JP-A- 2009 008 164
- JP-A- 2016 118 228
- JP-A- 2016 118 228
- JP-U- S60 173 733

## Description

### TECHNICAL FIELD

The present invention relates to a ball bearing.

### BACKGROUND ART

As bearings that support rotary shafts of, e.g., automobiles or industrial machines, ball bearings are often used. Ball bearings include an inner ring; an outer ring arranged radially outward of, and coaxially with, the inner ring; a plurality of balls disposed in the annular space between the inner ring and the outer ring; and a cage retaining the balls.

As such a cage, a wave-shaped iron plate cage is known (e.g., in the below-identified Patent Document 1), which is excellent in cost and productivity. The wave-shaped iron plate cage is constituted by a first annular member and a second annular member made of a steel plate, and axially opposed to each other; and a plurality of rivets coupling the first and second annular members together. The first annular member includes arc-shaped first pocket wall portions receiving the balls; and first flat plate portions circumferentially alternating with the first pocket wall portions, and each having a first rivet hole axially extending through the first annular member. Similarly, the second annular member also includes arc-shaped second pocket wall portions receiving the balls; and second flat plate portions circumferentially alternating with the second pocket wall portions, and each having a second rivet hole axially extending through the second annular member.

Each rivet includes a columnar rivet shaft; a pre-formed head formed beforehand at one end of the rivet shaft; and a crimped head formed by crimping the other end of the rivet shaft. The rivet shaft is inserted through the first rivet hole of the first flat plate portion and the second rivet hole of the second flat plate portion with the first and second flat plate portions superposed on each other. The pre-formed head and the crimped head are disposed such that the first and second flat plate portions are axially sandwiched therebetween. The pre-formed head is axially engaged with the first flat plate portion, and the crimped head is axially engaged with the second flat plate portion.

From the viewpoint of cost and productivity, the first and second annular members, which constitute the wave-shaped iron plate cage, are often formed by pressing a rolled steel plate such as a cold-rolled steel plate (SPCC). However, since rolled steel sheets are relatively low in hardness and wear resistance, if the first and second annular members are formed by a rolled steel plate, depending on the operating conditions of the bearing, the first and second annular members may wear due to the contact of the balls, and the wave-shaped iron plate cage may break in the worst case.

In order to improve the durability of the wave-shaped iron plate cage, a method for conducting a soft nitriding treatment to the wave-shaped iron plate cage is proposed (see the below-identified Patent Document 2). The "soft nitriding treatment" is a treatment for forming a nitrided layer (surface-hardened layer) on the surface of a steel, and for example, by heating a steel at a temperature lower than the transformation point (within the temperature range of about 400°C to 590°C) in a mixed gas atmosphere of ammonia gas and endothermic denaturing gas, nitrogen infiltrates into the surface of the steel, thereby forming a nitrided layer. By conducting a soft nitriding treatment to the wave-shaped iron plate cage, it is possible to improve the durability of the wave-shaped iron plate cage without substantially changing the dimensions of the wave-shaped iron plate cage.

### PRIOR ART DOCUMENT(S)

### PATENT DOCUMENT(S)

Patent Document 1: Japanese Unexamined Patent Application Publication No. 2017-110784
Patent Document 2: Japanese Patent No. 6098720

JP 2016 118228 A discloses the features of the preamble of claim 1.

### SUMMARY OF THE INVENTION

### PROBLEMS TO BE SOLVED BY THE INVENTION

The above wave-shaped iron plate cage can be assembled as follows: First, the first annular member is prepared, and the rivets are press-fitted into the respective first rivet holes in the first flat plate portions of the first annular member. At this time, each rivet press-fitted in the first rivet hole is retained at the first annular member by the interference between its rivet shaft and the first rivet hole. Also, the rivet shaft of each rivet partially protrudes beyond an abutment surface of the first flat plate portion against the second flat plate portion. Thereafter, the first annular member is superposed onto the second annular member such that a plurality of balls disposed between the inner ring and the outer ring so as to be circumferentially equidistantly spaced apart from each other are each sandwiched from both axial sides by the first pocket wall portion of the first annular member and the second pocket wall portion of the second annular member. At this time, the rivets partially protruding beyond the first annular member are inserted through the respective second rivet holes of the second annular member so as to partially protrude beyond the second rivet holes toward the side of the second annular member opposite from the first annular member. Last, the portions of the rivet shafts protruding beyond the second rivet holes are axially crushed and crimped, so that crimped heads are formed and the first annular member and the second annular member are coupled together.

If a soft nitriding treatment is conducted to the above wave-shaped iron plate cage, a soft nitriding treatment can be conducted with the following method: First, the rivets that have not been subjected to a soft nitriding treatment are press-fitted into the first rivet holes of the first annular member that has not been subjected to a soft nitriding treatment, and a soft nitriding treatment is conducted to the first annular member and the rivets combined together by the press-fitting. Also, a soft nitriding treatment is conducted to the second annular member. Thereafter, the first and second annular members are coupled together.

If a soft nitriding treatment is conducted with the above method, since it is possible to conduct a soft nitriding treatment to the first annular member and the rivets all together with the rivets retained in the first rivets of the first annular member, it is possible to effectively conduct a soft nitriding treatment to the rivets. Also, if a soft nitriding treatment is conducted with this method, a nitrided layer is formed on the surface of the first annular member by the soft nitriding treatment, but the inner periphery of each first rivet hole (fitting surface thereof to which the rivet shaft is fitted) is masked by the rivet shaft, and thus has a non-nitrided surface formed with no nitrided layer.

When forming crimped heads by crimping the portions of the rivet shafts protruding beyond the respective second rivet holes toward the side of the second annular member opposite from the first annular member, if the portions of the rivet shafts that are crimped to be the crimped heads are shortened, the rivet shafts will be plastically deformed to radially expand, and the expansion of the rivet shafts is likely to cause tensile stress on the inner peripheries of the first rivet holes. It turned out that due to the tensile stress generated on the inner peripheries of the first rivet holes, the strength of the wave-shaped iron plate cage may decrease.

Especially since, when conducting a soft nitriding treatment with the above method, the inner periphery of each first rivet hole has a non-nitrided surface formed with no nitrided layer (no surface-hardened layer), if tensile stress is generated on the inner periphery of the first rivet hole, the strength of the wave-shaped iron plate cage is likely to decrease.

On the other hand, when forming crimped heads by crimping the portions of the rivet shafts protruding beyond the respective second rivet holes toward the side of the second annular member opposite from the first annular member, if the portions of the rivet shafts that are crimped to be the crimped heads are lengthened, the rivets could become axially unstable, thus preventing the first flat plate portions of the first annular member from sufficiently coming into close contact with the second flat plate portions of the second annular member.

It is an object of the present invention to provide a ball bearing which has a stable quality, and in which the strength of a wave-shaped iron plate cage is less likely to decrease.

### MEANS FOR SOLVING THE PROBLEMS

In order to achieve the above object, the present invention provides the following:

### [Arrangement 1]

A ball bearing comprising: an inner ring; an outer ring arranged radially outward of, and coaxially with, the inner ring; a plurality of balls disposed between the inner ring and the outer ring; and a wave-shaped iron plate cage retaining the balls, wherein the wave-shaped iron plate cage includes: a first annular member formed of a steel plate; a second annular member formed of a steel plate, and axially opposed to the first annular member; and a plurality of rivets coupling the first annular member and the second annular member together, wherein the first annular member includes: first pocket wall portions for receiving the respective balls; and first flat plate portions that have respective first rivet holes axially extending through the first annular member, and that circumferentially alternate with the first pocket wall portions, wherein the second annular member includes: second pocket wall portions for receiving the respective balls; and second flat plate portions that have respective second rivet holes axially extending through the second annular member, and that circumferentially alternate with the second pocket wall portions, and wherein each of the rivets includes: a columnar rivet shaft inserted through one of the first rivet holes and a corresponding one of the second rivet holes; a pre-formed head formed at one end of the rivet shaft; and axially engaging with one of the first flat plate portions; and a crimped head formed at the other end of the rivet shaft, and axially engaging with one of the second plate portions, characterized in that the crimped head of each of the rivets is formed to satisfy the following formula: 1.25 × Vₒ < V < 2.43 × Vₒ, where V is a volume of the crimped head, and Vₒ is a volume of a portion of the rivet shaft in interiors of the one of the first rivet holes and the corresponding one of the second rivet holes.

### [Arrangement 2]

The ball bearing according to arrangement 1, wherein the crimped head of each of the rivets is formed to satisfy the following formula: 1.25 × T × πr² < V < 2.43 × T × πr², where T is an axial thickness of a corresponding one of the first flat plate portions and a corresponding one of the second flat plate portion that are superposed on each other, and r is a radius of the rivet shaft.

With this arrangement, when forming crimped heads by crimping the portions of the rivet shafts protruding beyond the second rivet holes toward the side of the second annular member opposite from the first annular member, since the portions of the rivet shafts that are crimped to be the crimped heads are each longer than the length corresponding to 1.25 × T, the rivet shafts are less likely to be plastically deformed to radially expand, and tensile stress due to the expansion of the rivet shafts is less likely to occur on the inner peripheries of the first rivet holes. Therefore, the strength of the wave-shaped iron plate cage is less likely to decrease. Also, when forming crimped heads by crimping the portions of the rivet shafts protruding beyond the second rivet holes toward the side of the second annular member opposite from the first annular member, since the portions of the rivet shafts that are crimped to be the crimped heads are each shorter than the length corresponding to 2.43 × T, the rivets do not become axially unstable. Therefore, it is possible to sufficiently bring the first flat plate portions of the first annular member into close contact with the second flat plate portions of the second annular member, and to obtain a stable quality.

### [Arrangement 3]

The ball bearing according to arrangement 1 or 2, wherein nitrided layers are formed on a surface of the first annular member and a surface of the second annular member, respectively, wherein the nitrided layer of the second annular member is formed on an entire inner periphery of each of the second rivet holes, and wherein an inner periphery of each of the first rivet holes has a non-nitrided surface that is not formed with the nitrided layer of the first annular member.

The above arrangement is obtained by conducting a soft nitriding treatment with the following method: First, the rivets are press-fitted into the first rivet holes of the first annular member that has not been subjected to a soft nitriding treatment. Next, a soft nitriding treatment is conducted to the first annular member and the rivets combined together by the press-fitting. At this time, a nitrided layer is formed on the surface of the first annular member by the soft nitriding treatment, but the inner periphery of each first rivet hole (fitting surface thereof to which the rivet shaft is fitted) is masked by the rivet shaft, and thus has a non-nitrided surface formed with no nitrided layer. Thereafter, by superposing the first annular member onto the second annular member that has been subjected to a soft nitriding treatment; and crimping the portions of the rivet shafts protruding beyond the second rivet holes of the second annular member, the first and second annular members are coupled together. If a soft nitriding treatment is conducted with this method, since the inner periphery of each first rivet hole has a non-nitrided surface formed with no nitrided layer (no surface-hardened layer), when tensile stress is generated on the inner periphery of the first rivet hole, the strength of the wave-shaped iron plate cage is likely to decrease. In order to prevent tensile stress due to the expansion of the rivet shafts from occurring on the inner peripheries of the first rivet holes, it is particularly suitable to set the volume V of each crimped head to a value larger than 1.25 × T × πr² as described above.

### [Arrangement 4]

The ball bearing according to any one of arrangements 1 to 3, wherein the first annular member and the second annular member are formed of one of a carbon steel for machine structure, a carbon steel for cold heading and a stainless steel.

### [Arrangement 5]

The ball bearing according to any one of arrangements 1 to 4, wherein the rivets are formed of one of a carbon steel for machine structure, a carbon steel for cold heading and a stainless steel.

### [Arrangement 6]

According to the invention, the ball bearing according to arrangement 1, wherein the inner periphery of each of the first rivet holes is constituted by: a cylindrical shear surface having a constant inner diameter that does not axially change; and a tapered surface radially expanding from the shear surface toward a corresponding one of abutment surfaces of the first flat plate portions against the respective second flat plate portions, the tapered surface comprising a smooth surface formed by cutting.

With this arrangement, it is possible to particularly effectively prevent a reduction in the strength of the wave-shaped iron plate cage. That is, if, as a method for forming the first rivet holes, a method is used in which each first flat plate portion is punched, with a punch, from the side opposite from the abutment surface of the first flat plate portion against the second flat plate portion toward this abutment surface of the first flat plate portion, a shear surface is first formed on the inner periphery of the first rivet hole, and then a fracture surface is formed on the inner periphery of the first rivet hole from the side opposite from the abutment surface of the first flat plate portion against the second flat plate portion toward this abutment surface of the first flat plate portion. The shear surface is a smooth surface having a constant inner diameter that does not change in the axial direction, and the fracture surface is an irregular uneven surface created by tearing off the material of the first flat plate portion. If each first rivet hole is used as it is without additional machining, when tensile stress occurs on the inner periphery of the first rivet hole due to the expansion of the rivet shaft during formation of the crimped head, cracks or the like are likely to form starting from the fracture surface (irregular uneven surface) on the inner periphery of the first rivet hole, so that the strength of the wave-shaped iron plate cage could decrease. If the fracture surface on each first rivet hole is removed by cutting, even when tensile stress occurs on the inner periphery of the first rivet hole due to the expansion of the rivet shaft, cracks or the like are less likely to form on the inner periphery of the first rivet hole, thus making it possible to prevent a reduction in the strength of the wave-shaped iron plate cage. When the fracture surface on each first rivet hole is removed by cutting, a tapered surface radially expanding toward the abutment surface of the first flat surface against the second flat surface is formed on the inner periphery of the first rivet hole. The tapered surface is a smooth surface formed by cutting.

### EFFECTS OF THE INVENTION

With respect to the ball bearing of the present invention, when forming crimped heads by crimping the portions of the rivet shafts protruding beyond the second rivet holes toward the side of the second annular member opposite from the first annular member, the rivet shafts are less likely to be plastically deformed to radially expand, and tensile stress due to the expansion of the rivet shafts is less likely to occur on the inner peripheries of the first rivet holes. Therefore, the strength of the wave-shaped iron plate cage is less likely to decrease. Also, when forming crimped heads by crimping the portions of the rivet shafts protruding beyond the second rivet holes toward the side of the second annular member opposite from the first annular member, the rivets do not become axially unstable. Therefore, it is possible to sufficiently bring the first flat plate portions of the first annular member into close contact with the second flat plate portions of the second annular member, and to obtain a stable quality.

### BRIEF DESCRIPTION OF THE DRAWINGS

Fig. 1 is a sectional view of a ball bearing embodying the present invention.
Fig. 2 is a view illustrating a production step of a wave-shaped iron plate cage in Fig. 1; and a state in which a rivet is press-fitted in a first rivet hole formed in each first flat plate portion of a first annular member, and a second annular member is axially opposed to the first annular member.
Fig. 3 is a view illustrating a state in which the first annular member of Fig. 2 is superposed on the second annular member.
Fig. 4 is a view illustrating a state in which the first and second annular members are coupled together by crimping the portions of rivet shafts protruding beyond second rivet holes in Fig. 3.
Fig. 5A is an enlarged view of each rivet in Fig. 2.
Fig. 5B is a view illustrating a different example of the rivet in Fig. 5A.
Fig. 5C is a view illustrating a still different example of the rivet in Fig. 5A.
Fig. 6 is a view illustrating a step of crimping the portion of the rivet shaft of each rivet protruding beyond the second rivet hole in Fig. 3.
Fig. 7 is a view illustrating, as a comparative example, a rivet whose rivet shaft has a length longer than that of the rivet shaft in Fig. 6.
Fig. 8 is a view illustrating, as a comparative example, a rivet whose rivet shaft has a length shorter than that of the rivet shaft in Fig. 6.
Fig. 9 is an enlarged sectional view illustrating the first and second rivet holes and the vicinities thereof; and a state in which a soft nitriding treatment has been conducted to the first and second annular members in Fig. 2.
Fig. 10 is an enlarged sectional view illustrating the first and second rivet holes and the vicinities thereof; and a state in which the first and second annular members in Fig. 9 have been coupled together.
Fig. 11 is an enlarged sectional view illustrating each first rivet hole and the vicinity thereof; and a step of cutting and removing a fracture surface of the first rivet hole on its inner periphery.
Fig. 12 is a perspective view of the wave-shaped iron plate cage in Fig. 1.

### BEST MODE FOR CARRYING OUT THE INVENTION

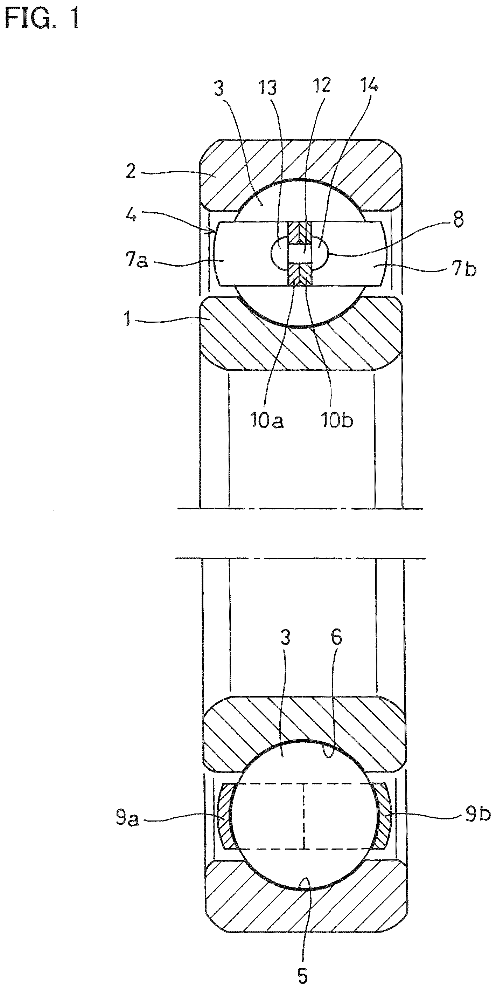

Fig. 1 illustrates a ball bearing according to an embodiment of the present invention. This ball bearing includes an inner ring 1; an outer ring 2 arranged radially outward of, and coaxially with, the inner ring 1; a plurality of balls 3 disposed between the inner ring 1 and the outer ring 2 so as to be circumferentially spaced apart from each other; and a wave-shaped iron plate cage 4 (hereinafter simply referred to as the "cage 4") that keeps the circumferential distances between the balls 3.

The outer ring 2 has, on its inner periphery, an outer ring raceway groove 5 with which the balls 3 come into rolling contact. The outer ring raceway groove 5 extends circumferentially at the axial central portion of the inner periphery of the outer ring 2. The inner ring 1 also has, on its outer periphery, an inner ring raceway groove 6 with which the balls 3 come into rolling contact. The inner ring raceway groove 6 extends circumferentially at the axial central portion of the outer periphery of the inner ring 1.

The balls 3 are radially sandwiched between the outer ring raceway groove 5 and the inner ring raceway groove 6. This ball bearing is a deep groove ball bearing. That is, the outer ring raceway groove 5 is a circular arc-shaped groove having a concave circular arc-shaped cross section symmetrical with respect to the axial center of the outer ring 2, and the inner ring raceway groove 6 is also a circular arc-shaped groove having a concave circular arc-shaped cross section symmetrical with respect to the axial center of the inner ring 1. The outer ring raceway groove 5 has an axial width dimension larger than half of the diameter of each ball 3, and the inner ring raceway groove 6 also has an axial width dimension larger than half of the diameter of each ball 3.

The cage 4 includes a first annular member 7a formed of a steel plate; a second annular member 7b formed of a steel plate, and axially opposed to the first annular member 7a; and a plurality of rivets 8 coupling the first annular member 7a and the second annular member 7b together.

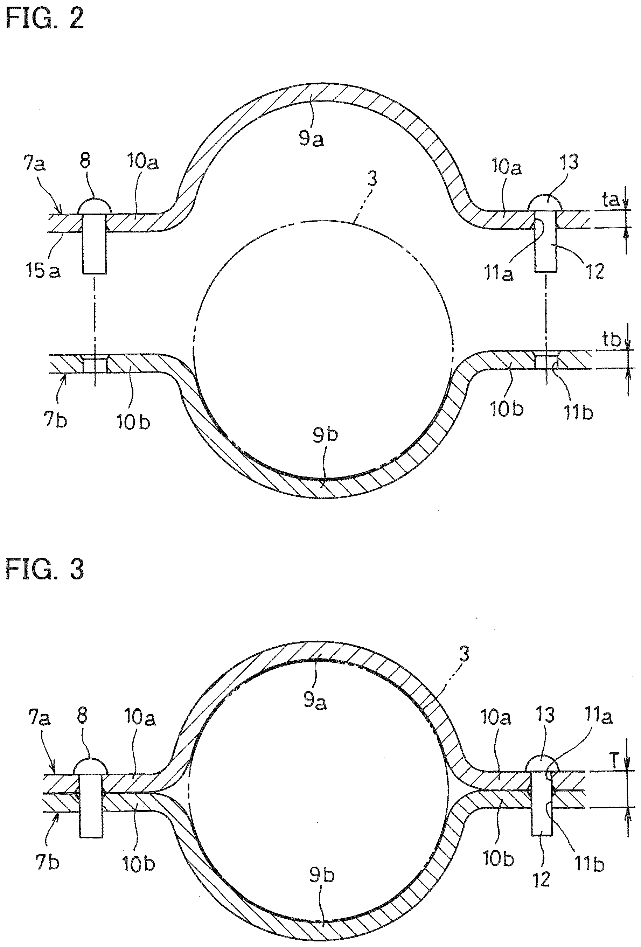

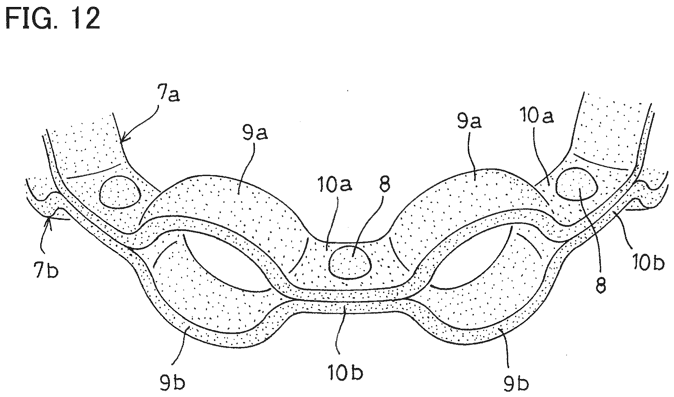

As illustrated in Figs. 2 and 12, the first annular member 7a includes circular arc-shaped first pocket wall portions 9a that receive the balls 3; and flat plate-shaped first flat plate portions 10a that are orthogonal to the axial direction (vertical direction in the relevant drawings), and that circumferentially alternate with the first pocket wall portions 9a. Similarly, the second annular member 7b also includes circular arc-shaped second pocket wall portions 9b that receive the balls 3; and flat plate-shaped second flat plate portions 10b that are orthogonal to the axial direction, and that circumferentially alternate with the second pocket wall portions 9b. The first annular member 7a has the same shape and dimensions as the second annular member 7b.

As illustrated in Fig. 2, a first rivet hole 11a is formed in each first flat plate portion 10a of the first annular member 7a so as to axially extend through the first annular member 7a; a second rivet hole 11b is formed in each second flat plate portion 10b of the second annular member 7b so as to axially extend through the second annular member 7b; and a common rivet 8 is inserted in the first and second rivet holes 11a and 11b. The second flat plate portion 10b has an axial thickness tb equal to the axial thickness ta of the first flat plate portion 10a. The "axial thickness tb equal to the axial thickness ta" does not necessarily require that the axial thicknesses ta and tb should be strictly equal to each other in the mathematical sense, and means that the axial thicknesses ta and tb may be substantially equal to each other to such an extent that manufacturing errors are allowed.

The first annular member 7a is formed by pressing a plate material formed of one of a carbon steel for machine structure (such as SC material or S45C), a carbon steel for cold heading and a stainless steel. The first rivet holes 11a are formed by punching the first flat plate portions 10a using a punch. Similarly, the second annular member 7b is also formed by pressing a plate material formed of one of a carbon steel for machine structure, a carbon steel for cold heading and a stainless steel. The second rivet holes 11b are formed by punching the second flat plate portions 10b using a punch. The rivets 8 are formed of a wire rod of one of a carbon steel for machine structure, a carbon steel for cold heading and a stainless steel.

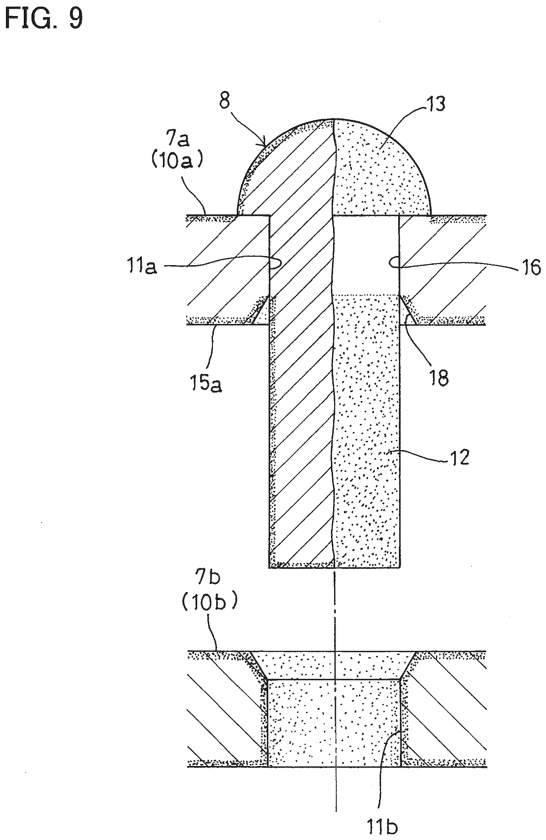

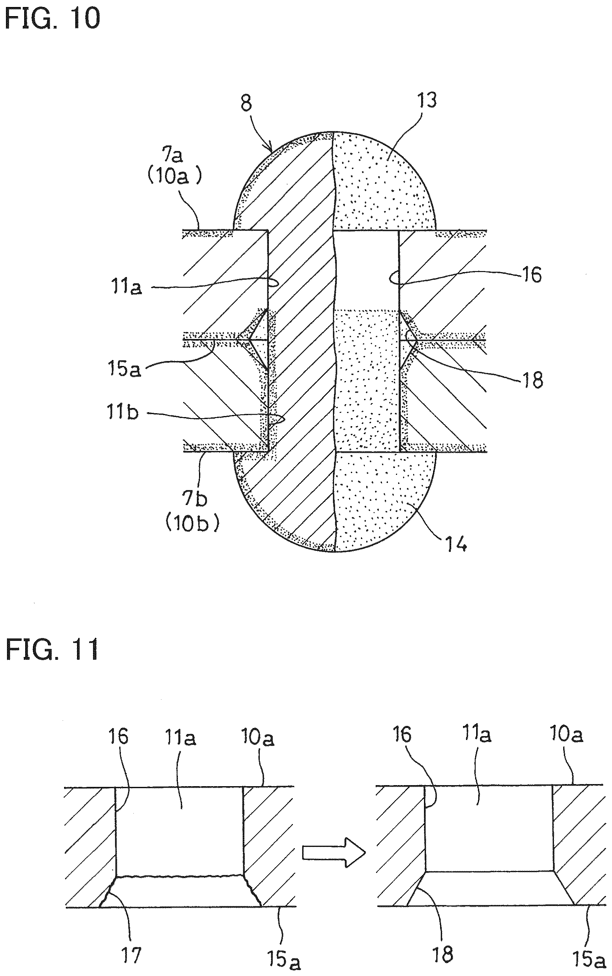

A nitrided layer is formed on the surface of the first annular member 7a by conducting a soft nitriding treatment, and a nitrided layer is also formed on the surface of the second annular member 7b by conducting a soft nitriding treatment. The "nitrided layer" is a surface-hardened layer having a hardness of 400 HV or more, and is an extremely thin chemical compound layer (compound layer comprising iron and nitrogen) having a thickness of 20 pm or less. As illustrated in Figs. 9 and 10, a nitrided layer is formed on the entire inner periphery of each second rivet hole 11b, whereas the inner periphery of each first rivet hole 11a has a non-nitrided surface formed with no nitrided layer.

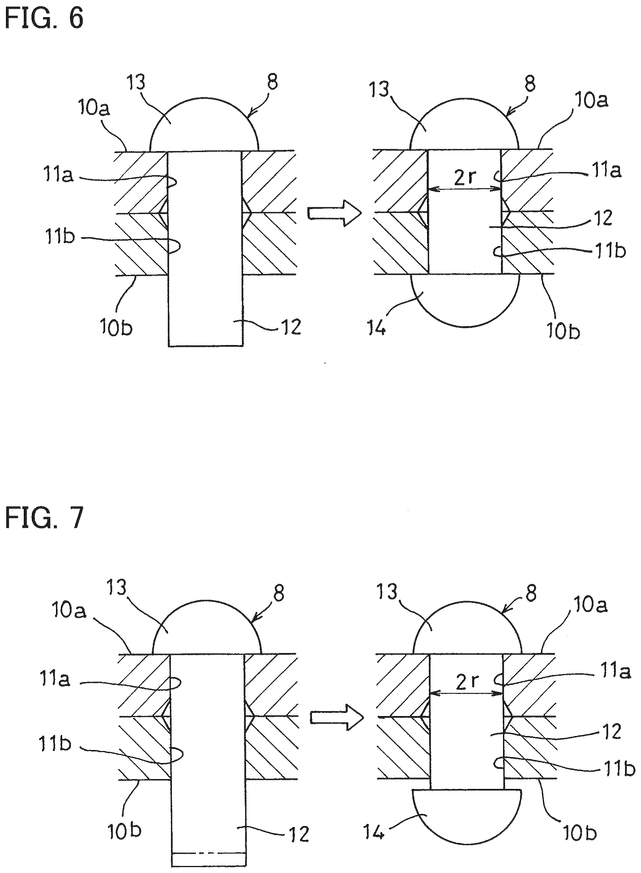

As illustrated in Figs. 6 and 10, each rivet 8 includes a columnar rivet shaft 12; a pre-formed head 13 formed beforehand at one end (upper end in the relevant drawings) of the rivet shaft 12; and a crimped head 14 formed by crimping the other end (lower end in the relevant drawings) of the rivet shaft 12. As illustrated in Fig. 6, the rivet shaft 12 is inserted through the first and second rivet holes 11a and 11b with the first and second flat plate portions 10a and 10b superposed on each other. The pre-formed head 13 and the crimped head 14 are disposed such that the first and second flat plate portions 10a and 10b are axially sandwiched therebetween. The pre-formed head 13 is axially engaged with the first flat plate portion 10a , and the crimped head 14 is axially engaged with the second flat plate portion 10b. The crimped head 14 has a hemispherical shape having a diameter larger than the diameter of the rivet shaft 12.

The cage 4 can be manufactured as follows:

First, as illustrated in Fig. 2, a first annular member 7a including the first pocket wall portions 9a and the first flat plate portions 10a is formed by pressing a steel plate. Next, each first rivet hole 11a is formed in the first flat plate portion 10a of the first annular member 7a by punching with a punch. At this time, the first rivet hole 11a is formed by punching, with a punch, the first flat plate portion 10a from the side opposite from an abutment surface 15a of the first flat plate portion 10a (that abuts) against the second flat plate portion 10b toward the abutment surface 15a of the first flat plate portion 10a (from the upper side toward the lower side in Fig. 2). Due to this, as illustrated on the left side of Fig. 11, the first rivet hole 11a has an inner periphery formed with a cylindrical shear surface 16 having a constant inner diameter that does not change in the axial direction; and a tapered fracture surface 17 radially expanding from the shear surface 16 toward the abutment surface 15a. The cylindrical shear surface 16 is first formed and then the tapered fracture surface 17 is formed from the side opposite from the abutment surface 15a toward the abutment surface 15a (from the upper side toward the lower side in Fig. 11). The shear surface 16 is a smooth surface having an axially extending striated pattern. On the other hand, the fracture surface 17 is an irregular uneven surface created by tearing off the material of the first flat plate portion 10a. The fracture surface 17 has a surface roughness larger than that of the shear surface 16. Thereafter, as illustrated on the right side of Fig. 11, the inner periphery of the first rivet hole 11a at its end portion closer to the abutment surface 15a (end portion on the lower side in Fig. 11) is cut with a chamfering drill, thereby removing the fracture surface 17 of the first rivet hole 11a on its inner periphery. Due to this, a tapered surface 18 radially expanding toward the abutment surface 15a is formed on the inner periphery of the first rivet hole 11a. The tapered surface 18 is a smooth surface formed by cutting. The second annular member 7b is also formed in the same manner as described above.

Next, as illustrated in Fig. 2, the rivets 8 are press-fitted into the respective first rivet holes 11a in the first flat plate portions 10a of the first annular member 7a. At this time, each rivet 8 press-fitted in the first rivet hole 11a is retained at the first annular member 7a by the interference between its rivet shaft 12 and the first rivet hole 11a. Also, the rivet shaft 12 of each rivet 8 partially protrudes beyond the abutment surface 15a of the first flat plate portion 10a against the second flat plate portion 10b.

Thereafter, a soft nitriding treatment is conducted to the rivets 8 and the first annular member 7a that are now integrally combined together by press fitting. The "soft nitriding treatment" is a treatment for forming a nitrided layer (surface-hardened layer) on the surface of a steel, and for example, by heating a steel at a temperature lower than the transformation point (within the temperature range of about 400°C to 590°C) in a mixed gas atmosphere of ammonia gas and endothermic denaturing gas, nitrogen infiltrates into the surface of the steel, thereby forming a nitrided layer. By conducting a soft nitriding treatment to the cage 4, it is possible to improve the durability of the cage 4 without substantially changing the dimensions of the cage 4. By conducting a soft nitriding treatment, a nitrided layer is formed on the surface of the first annular member 7a, but as illustrated in Fig. 9, the inner periphery of each first rivet hole 11a (fitting surface thereof to which the rivet shaft 12 is fitted) is masked by the rivet shaft 12, and thus has a non-nitrided surface formed with no nitrided layer. Similarly, the portion of the outer periphery of each rivet shaft 12 fitted to the inner periphery of the first rivet hole 11a also has a non-nitrided surface formed with no nitrided layer.

Also, a soft nitriding treatment is conducted to the second annular member 7b which has not been coupled to the first annular member 7a yet as illustrated in Fig. 9. At this time, since each rivet 8 has not been inserted in the second rivet hole 11b of the second annular member 7b and the entire inner periphery of the second rivet hole 11b is exposed, a nitrided layer is formed on the entire inner periphery of the second rivet hole 11b.

Thereafter, a plurality of balls 3 are placed between the inner ring 1 and the outer ring 2 illustrated in Fig. 1 so as to be circumferentially equidistantly spaced apart from each other, and the first annular member 7a and the second annular member 7b are superposed on each other such that each ball 3 is sandwiched from both axial sides by the first pocket wall portion 9a of the first annular member 7a and the second pocket wall portion 9b of the second annular member 7b illustrated in Fig. 3. At this time, the rivet shafts 12 partially protruding beyond the first annular member 7a are inserted through the respective second rivet holes 11b of the second annular member 7b so as to partially protrude beyond the second rivet holes 11b toward the side of the second annular member 7b opposite from the first annular member 7a (toward the lower side in Fig. 3).

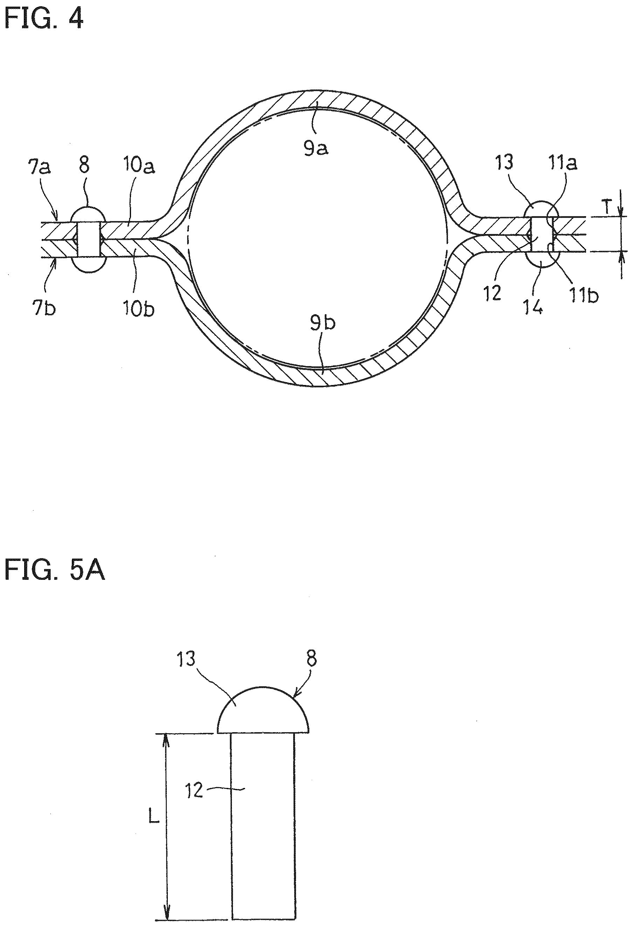

Thereafter, as illustrated in Fig. 4, the portions of the rivet shafts 12 protruding beyond the respective second rivet holes 11b of the second annular member 7b are axially crushed and crimped (plastically deformed) by a crimping die (not shown), so that crimped heads 14 are formed and the first annular member 7a and the second annular member 7b are coupled together.

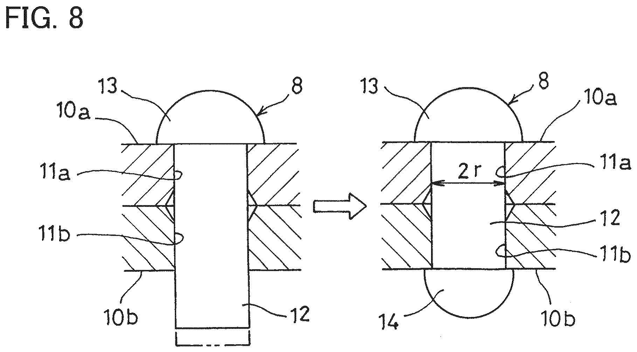

When forming crimped heads 14 by crimping the portions of the rivet shafts 12 protruding beyond the respective second rivet holes 11b as illustrated in Fig. 6, if the portions of the rivet shafts 12 that are crimped to be the crimped heads 14 are shortened as illustrated in Fig. 8, the rivet shafts 12 will be plastically deformed to radially expand, and the expansion of the rivet shafts 12 is likely to cause tensile stress on the inner peripheries of the first rivet holes 11a. Due to the tensile stress generated on the inner peripheries of the first rivet holes 11a, the strength of the cage 4 may decrease.

Especially since, when conducting a soft nitriding treatment with the above method, the inner periphery of each first rivet hole 11a has a non-nitrided surface formed with no nitrided layer (no surface-hardened layer) as illustrated in Fig. 9, if tensile stress is generated on the inner periphery of the first rivet hole 11a, the strength of the cage 4 is likely to decrease.

On the other hand, when forming crimped heads 14 by crimping the portions of the rivet shafts 12 protruding beyond the respective second rivet holes 11b, if the portions of the rivet shafts 12 that are crimped to be the crimped heads 14 are lengthened as illustrated in Fig. 7, the rivets 8 could become axially unstable, thus preventing the first flat plate portions 10a from sufficiently coming into close contact with the second flat plate portions 10b. In order to prevent each rivet 8 from becoming unstable, it is considered to increase the crimping load on the rivet shaft 12, but if the crimping load on the rivet shaft 12 is increased, the rivet shaft 12 will expand, and due to the expansion of the rivet shaft 12, tensile stress is likely to occur on the inner periphery of the first rivet hole 11a.

In the above embodiment, in order to prevent tensile stress from occurring on the inner periphery of each first rivet hole 11a due to the expansion of the rivet shaft 12; and sufficiently bring the first flat plate portions 10a into close contact with the second flat plate portions 10b, the length L of the rivet shaft 12 shown in Fig. 5A is set to satisfy the following formula: 2.25 × T < L < 3.43 × T, where T is the axial thickness (i.e., the total of the thicknesses) of the first and second flat plate portions 10a and 10b that are superposed on each other as illustrated in Fig. 3.

Since the length L of each rivet shaft 12 is set to satisfy the above formula, when forming a crimped head 14 by crimping the portion of the rivet shaft 12 protruding beyond the second rivet hole 11b as illustrated in Fig. 6, the volume V of the crimped head 14 satisfies the following formula: 1.25 × T × πr² < V < 2.43 × T × πr², where r is the radius of the rivet shaft 12 shown in Figs. 6 to 8.

Also, the volume V of the crimped head 14 satisfies the following formula: 1.25 × Vₒ < V < 2.43 × Vₒ, where Vₒ is the volume of the portion of the rivet shaft 12 in the interiors of the first and second rivet holes 11a and 11b after crimping the rivet shaft 12.

When producing a bearing, it is possible to detect a defect in the rivets 8 or a defect in the attachment of the rivets 8 by measuring the volumes V of the crimped heads 14 by image processing; and judging whether or not the volumes V are within the range of the above formulas/inequalities.

With respect to the ball bearing of this embodiment, when forming crimped heads 14 by crimping the portions of the rivet shafts 12 protruding beyond the second rivet holes 11b as illustrated in Fig. 6, since the portions of the rivet shafts 12 that are crimped to be the crimped heads 14 (portions of the rivet shafts 12 protruding beyond the second rivet holes 11b) are each longer than the length corresponding to 1.25 × T, the rivet shafts 12 are less likely to expand, and tensile stress due to the expansion of the rivet shafts 12 is less likely to occur on the inner peripheries of the first rivet holes 11a. Therefore, the strength of the cage 4 is less likely to decrease.

Also, with respect to this ball bearing, when forming crimped heads 14 by crimping the portions of the rivet shafts 12 protruding beyond the second rivet holes 11b as illustrated in Fig. 6, since the portions of the rivet shafts 12 that are crimped to be the crimped heads 14 (portions of the rivet shafts 12 protruding beyond the second rivet holes 11b) are each shorter than the length corresponding to 2.43 × T, the rivets 8 do not become axially unstable. Therefore, it is possible to sufficiently bring the first flat plate portions 10a of the first annular member 7a into close contact with the second flat plate portions 10b of the second annular member 7b, and to obtain a stable quality.

Also, with respect to this ball bearing, since, as illustrated in Fig. 10, the inner periphery of each first rivet hole 11a has a non-nitrided surface formed with no nitrided layer (no surface-hardened layer), if tensile stress occurs on the inner periphery of the first rivet hole 11a, the strength of the cage 4 is likely to decrease. However, as illustrated in Fig. 6, when forming crimped heads 14 by crimping the portions of the rivet shafts 12 protruding beyond the second rivet holes 11b, since the portions of the rivet shafts 12 that are to be crimped to be the crimped heads 14 (portions of the rivet shafts 12 protruding beyond the second rivet holes 11b) are each longer than the length corresponding to 1.25 × T, it is possible to effectively prevent tensile stress due to the expansion of the rivet shafts 12 from occurring on the inner peripheries of the first rivet holes 11a.

The following table shows analysis results of the relationship between the length L of the portion of each rivet shaft 12 that will be crimped later (see Fig. 5A), the radius r of the rivet shaft 12 (see Figs. 6 to 8), the axial thickness T of each first flat plate portion 10a of the first annular member 7a and the corresponding second flat plate portion 10b of the second annular member 7b that are superposed on each other (see Fig. 3), a case in which a reduction in the strength of the cage 4 due to tensile stress on the inner peripheries of the first rivet holes 11a is seen or not seen, and the adhesiveness between the first and second plate portions 10a and 10b.

**[Table 1]**

| L/T | Reduction in the strength of the cage due to tensile stress | Adhesiveness between the first and second flat plate portions |
|---|---|---|
| 2.25 | Seen | Good |
| 2.34 | Not seen | Good |
| 2.70 | Not seen | Good |
| 3.05 | Not seen | Good |
| 3.43 | Not seen | Bad |

The analysis results in the above table show that by setting the length L (see Fig. 5A) of the portion of the rivet shaft 12 that will be crimped later such that the ratio L/T of the length L to the axial thickness T (see Fig. 3) of the first and second flat plate portions 10a and 10b that are superposed on each other is larger than 2.25, it is possible to prevent a reduction in the strength of the cage 4, whereas by setting the length L such that the ratio L/T is smaller than 3.43, it is possible to prevent the adhesiveness between the first and second annular members 7a and 7b from deteriorating.

Also, with respect to this ball bearing, since the tapered surfaces 18 on the inner peripheries of the first rivet holes 11a are smooth surfaces formed by cutting, it is possible to particularly effectively prevent a reduction in the strength of the cage 4. That is, if, as illustrated on the left side of Fig. 11, in each first rivet hole 11a, which is formed by punching the first flat plate portion 10a, the fracture surface 17, which is an irregular uneven surface created by tearing off the material of the first flat plate portion 10a, is used as it is without removing the fracture surface 17 by additional machining, when tensile stress occurs on the inner periphery of the first rivet hole 11a due to the expansion of the rivet shaft 12 during formation of the crimped head 14, cracks or the like are likely to form starting from the fracture surface 17 (irregular uneven surface), so that the strength of the cage 4 could decrease. In contrast thereto, if the fracture surface 17 shown in Fig. 11 is removed by cutting as in the above embodiment, even when tensile stress occurs on the inner periphery of the first rivet hole 11a due to the expansion of the rivet shaft 12, cracks or the like are less likely to form on the inner periphery of the first rivet hole 11a, thus making it possible to prevent a reduction in the strength of the cage 4.

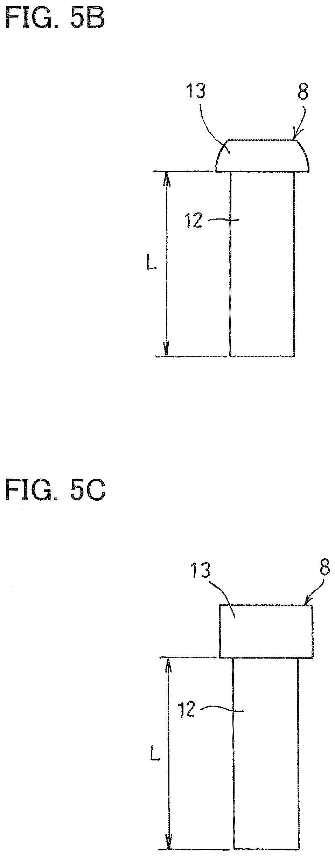

While, in the above embodiment, rivets 8 including a hemispherical pre-formed head 13 as illustrated in Fig. 5A are exemplified and described, rivets 8 including a spherical segment-shaped pre-formed head 13 as illustrated in Fig. 5B, or rivets 8 including a cylindrical pre-formed head 13 as illustrated in Fig. 5C may be used.

While, in the above embodiment, a hollow annular member having an inner ring raceway groove 6 in the outer periphery is exemplified and described as the inner ring 1, the inner ring 1 does not necessarily need to be a hollow annular member. For example, a solid member (shaft body) having an inner ring raceway groove 6 which is directly formed in the outer periphery and with which the balls 3 come into rolling contact may be used as the inner ring 1. In short, an inner member having, in the outer periphery, an annular inner ring raceway groove with which the balls come into rolling contact can be used as the inner ring.

While, in the above embodiment, a hollow annular member having an outer ring raceway groove 5 in the inner periphery is exemplified and described as the outer ring 2, the outer ring 2 does not necessarily need to be a hollow annular member. For example, a bearing housing having an outer ring raceway groove 5 which is directly formed in the inner periphery and with which the balls 3 come into rolling contact may be used as the outer ring 2. In short, an outer member having, in the inner periphery, an annular outer ring raceway groove with which the balls come into rolling contact can be used as the outer ring.

The above-described embodiment is a mere example in every respect, and the present invention is not limited thereto. The scope of the present invention is indicated not by the above description but by the claims.

### DESCRIPTION OF REFERENCE NUMERALS

1: Inner ring
2: Outer ring
3: Ball
4: Wave-shaped iron plate cage
7a: First annular member
7b: Second annular member
8: Rivet
9a: First pocket wall portion
9b: Second pocket wall portion
10a: First flat plate portion
10b: Second flat plate portion
11a: First rivet hole
11b: Second rivet hole
12: Rivet shaft
13: Pre-formed head
14: Crimped head
15a: Abutment surface
16: Shear surface
18: Tapered surface

## Claims

1. A ball bearing comprising:
an inner ring (1);
an outer ring (2) arranged radially outward of, and coaxially with, the inner ring (1);
a plurality of balls (3) disposed between the inner ring (1) and the outer ring (2); and
a wave-shaped iron plate cage (4) retaining the balls (3),
wherein the wave-shaped iron plate cage (4) includes:
a first annular member (7a) formed of a steel plate;
a second annular member (7b) formed of a steel plate, and axially opposed to the first annular member (7a); and
a plurality of rivets (8) coupling the first annular member (7a) and the second annular member (7b) together,
wherein the first annular member (7a) includes:
first pocket wall portions (9a) for receiving the respective balls (3); and
first flat plate portions (10a) that have respective first rivet holes (11a) axially extending through the first annular member (7a), and that circumferentially alternate with the first pocket wall portions (9a),
wherein the second annular member (7b) includes:
second pocket wall portions (9b) for receiving the respective balls (3); and
second flat plate portions (10b) that have respective second rivet holes (11b) axially extending through the second annular member (7b) , and that circumferentially alternate with the second pocket wall portions (9b), and
wherein each of the rivets (8) includes:
a columnar rivet shaft (12) inserted through one of the first rivet holes (11a) and a corresponding one of the second rivet holes (11b);
a pre-formed head (13) formed at one end of the rivet shaft (12); and axially engaging with one of the first flat plate portions (10a); and
a crimped head (14) formed at the other end of the rivet shaft (12), and axially engaging with one of the second plate portions (10b),
**characterized in that** the crimped head (14) of each of the rivets (8) is formed to satisfy the following formula: 1.25 × Vo < V < 2.43 × Vo, where V is a volume of the crimped head (14), and Vo is a volume of a portion of the rivet shaft (12) in interiors of the one of the first rivet holes (11a) and the corresponding one of the second rivet holes (11b), and
wherein the inner periphery of each of the first rivet holes (11a) is constituted by:
a cylindrical shear surface (16) having a constant inner diameter that does not axially change; and
a tapered surface (18) radially expanding from the shear surface (16) toward a corresponding one of abutment surfaces (15a) of the first flat plate portions (10a) against the respective second flat plate portions (10b), the tapered surface (18) comprising a smooth surface formed by cutting.

2. The ball bearing according to claim 1, wherein the crimped head (14) of each of the rivets (8) is formed to satisfy the following formula: 1.25 × T × πr2 < V < 2.43 × T × πr2, where T is an axial thickness of a corresponding one of the first flat plate portions (10a) and a corresponding one of the second flat plate portion (10b) that are superposed on each other, and r is a radius of the rivet shaft (12).

3. The ball bearing according to claim 1 or 2, wherein nitrided layers are formed on a surface of the first annular member (7a) and a surface of the second annular member (7b), respectively,
wherein the nitrided layer of the second annular member (7b) is formed on an entire inner periphery of each of the second rivet holes (11b), and
wherein an inner periphery of each of the first rivet holes (11a) has a non-nitrided surface that is not formed with the nitrided layer of the first annular member (7a).

4. The ball bearing according to any one of claims 1 to 3, wherein the first annular member (7a) and the second annular member (7b) are formed of one of a carbon steel for machine structure, a carbon steel for cold heading and a stainless steel.

5. The ball bearing according to any one of claims 1 to 4, wherein the rivets (8) are formed of one of a carbon steel for machine structure, a carbon steel for cold heading and a stainless steel.

## Patentansprüche

1. Ein Kugellager, umfassend:
einen Innenring (1);
einen Außenring (2), der radial außerhalb des Innenrings (1) und koaxial zu diesem angeordnet ist;
eine Vielzahl von Kugeln (3), die zwischen dem Innenring (1) und dem Außenring (2) angeordnet sind; und
einen wellenförmigen Eisenplattenkäfig (4), der die Kugeln (3) hält, wobei der wellenförmige Eisenplattenkäfig (4) umfasst:
ein erstes ringförmiges Element (7a), das aus einer Stahlplatte gebildet ist;
ein zweites ringförmiges Element (7b), das aus einer Stahlplatte gebildet ist und dem ersten ringförmigen Element (7a) axial gegenüberliegt; und
eine Vielzahl von Nieten (8), die das erste ringförmige Element (7a) und das zweite ringförmige Element (7b) miteinander verbinden, wobei
das erste ringförmige Element (7a) umfasst:
erste Taschenwandabschnitte (9a) zur Aufnahme der jeweiligen Kugeln (3); und
erste flache Plattenabschnitte (10a), die jeweilige erste Nietlöcher (11a) aufweisen, die sich axial durch das erste ringförmige Element (7a) erstrecken, und die sich in Umfangsrichtung mit den ersten Taschenwandabschnitten (9a) abwechseln, wobei
das zweite ringförmige Element (7b) umfasst:
zweite Taschenwandabschnitte (9b) zur Aufnahme der jeweiligen Kugeln (3); und
zweite flache Plattenabschnitte (10b), die jeweilige zweite Nietlöcher (11b) aufweisen, die sich axial durch das zweite ringförmige Element (7b) erstrecken und die sich in Umfangsrichtung mit den zweiten Taschenwandabschnitten (9b) abwechseln, und wobei jeder der Nieten (8) umfasst:
einen säulenförmigen Nietschaft (12), der durch eines der ersten Nietlöcher (11a) und ein entsprechendes der zweiten Nietlöcher (11b) eingeführt ist;
einen vorgeformten Kopf (13), der an einem Ende des Nietschafts (12) ausgebildet ist; und der axial mit einem der ersten flachen Plattenabschnitte (10a) in Eingriff steht; und
einen am anderen Ende des Nietschafts (12) ausgebildeten, gekrimpten Kopf (14), der axial mit einem der zweiten Plattenabschnitte (10b) in Eingriff steht,
**dadurch gekennzeichnet, dass**
der gekrimpten Kopf (14) jedes der Nieten (8) so ausgebildet ist, dass er die folgende Formel erfüllt: 1,25 x Vo < V < 2,43 x Vo, wobei V das Volumen des gekrimpten Kopfes (14) ist und Vo das Volumen eines Abschnitts des Nietschafts (12) im Inneren des einen der ersten Nietlöcher (11a) und des entsprechenden der zweiten Nietlöcher (11b) ist, und wobei
der Innenumfang jedes der ersten Nietlöcher (11a) gebildet ist durch:
einer zylindrischen Scherfläche (16) mit einem konstanten Innendurchmesser, der sich axial nicht ändert; und
einer sich von der Scherfläche (16) radial zu einer entsprechenden der Anlageflächen (15a) der ersten flachen Plattenabschnitte (10a) an den jeweiligen zweiten flachen Plattenabschnitten (10b) hin erweiternden konischen Fläche (18), wobei die konische Fläche (18) eine durch Schneiden gebildete glatte Oberfläche umfasst.

2. Das Kugellager gemäß Anspruch 1, wobei
der gekrimpte Kopf (14) jeder der Nieten (8) so ausgebildet ist, dass er die folgende Formel erfüllt: 1,25 × T × πr² < V < 2,43 × T × πr², wobei T eine axiale Dicke eines entsprechenden der ersten flachen Plattenabschnitte (10a) und eines entsprechenden der zweiten flachen Plattenabschnitte (10b) ist, die übereinander angeordnet sind, und r ein Radius des Nietschafts (12) ist.

3. Das Kugellager gemäß Anspruch 1 oder 2, wobei
auf einer Oberfläche des ersten ringförmige Elements (7a) und einer Oberfläche des zweiten ringförmige Elements (7b) jeweils nitrierte Schichten ausgebildet sind, wobei
die nitrierte Schicht des zweiten ringförmige Elements (7b) auf dem gesamten Innenumfang jedes der zweiten Nietlöcher (11b) ausgebildet ist, und wobei
ein Innenumfang jedes der ersten Nietlöcher (11a) eine nicht nitrierte Oberfläche aufweist, die nicht mit der nitrierten Schicht des ersten ringförmige Elements (7a) gebildet ist.

4. Das Kugellager gemäß einem der Ansprüche 1 bis 3, wobei
das erste ringförmige Element (7a) und das zweite ringförmige Element (7b) aus einem der folgenden Werkstoffe bestehen: einem Kohlenstoffstahl für Maschinenbau, einem Kohlenstoffstahl für Kaltstauchen und einem rostfreien Stahl.

5. Das Kugellager gemäß einem der Ansprüche 1 bis 4, wobei
die Nieten (8) aus einem der folgenden Werkstoffe bestehen: Kohlenstoffstahl für Maschinenbau, Kohlenstoffstahl für Kaltstauchen oder rostfreier Stahl.

## Revendications

1. Roulement à billes comprenant :
une bague intérieure (1) ;
une bague extérieure (2) disposée radialement à l'extérieur de la bague intérieure (1), et coaxiale avec celle-ci ;
une pluralité de billes (3) disposées entre la bague intérieure (1) et la bague extérieure (2) ; et
un plateau cage en acier de forme ondulée (4) retenant les billes (3),
dans lequel le plateau cage en acier de forme ondulée (4) comporte :
un premier élément annulaire (7a) formé d'une tôle en acier ;
un second élément annulaire (7b) formé d'une tôle en acier, et opposé axialement au premier élément annulaire (7a) ; et
une pluralité de rivets (8) accouplant ensemble le premier élément annulaire (7a) et le second élément annulaire (7b),
dans lequel le premier élément annulaire (7a) comporte :
des premières portions de paroi de poche (9a) destinées à recevoir les billes (3) respectives ; et
des premières portions de plaque plate (10a) qui ont des premiers trous de rivet (11a) respectifs s'étendant axialement à travers le premier élément annulaire (7a), et qui alternent circonférentiellement avec les premières portions de paroi de poche (9a), dans lequel le second élément annulaire (7b) comporte :
des secondes portions de paroi de poche (9b) destinées à recevoir les billes (3) respectives ; et
des secondes portions de plaque plate (10b) qui ont des seconds trous de rivet (11b) respectifs s'étendant axialement à travers le second élément annulaire (7b), et qui alternent circonférentiellement avec les secondes portions de paroi de poche (9b), et
dans lequel chacun des rivets (8) comporte :
une tige de rivet colonnaire (12) insérée à travers l'un des premiers trous de rivet (11a) et un trou correspondant des seconds trous de rivet (11b) ;
une tête préformée (13) formée à une extrémité de la tige de rivet (12), et venant en prise axialement avec l'une des premières portions de plaque plate (10a) ; et
une tête sertie (14) formée à l'autre extrémité de la tige de rivet (12), et venant en prise axialement avec l'une des secondes portions de plaque (10b),
**caractérisé en ce que** la tête sertie (14) de chacun des rivets (8) est formée de manière à satisfaire à la formule suivante : 1,25 × Vo < V < 2,43 × Vo, où V est un volume de la tête sertie (14), et Vo est un volume d'une portion de la tige de rivet (12) dans des intérieurs de l'un des premiers trous de rivet (11a) et du trou correspondant des seconds trous de rivet (11b), et
dans lequel la périphérie intérieure de chacun des premiers trous de rivet (11a) est constituée de :
une surface de cisaillement cylindrique (16) ayant un diamètre intérieur constant qui ne varie pas axialement ; et
une surface conique (18) s'évasant radialement depuis la surface de cisaillement (16) vers une surface correspondante de surfaces de butée (15a) des premières portions de plaque plate (10a) contre les secondes portions de plaque plate (10b) respectives, la surface conique (18) comprenant une surface lisse formée par découpe.

2. Roulement à billes selon la revendication 1, dans lequel la tête sertie (14) de chacun des rivets (8) est formée de manière à satisfaire à la formule suivante : 1,25 × T × πr2 < V < 2,43 × T × πr2, où T est une épaisseur axiale d'une portion correspondante des premières portions de plaque plate (10a) et d'une portion correspondante des secondes portions de plaque plate (10b) qui sont superposées l'une sur l'autre, et r est un rayon de la tige de rivet (12).

3. Roulement à billes selon la revendication 1 ou 2, dans lequel des couches nitrurées sont formées respectivement sur une surface du premier élément annulaire (7a) et sur une surface du second élément annulaire (7b),
dans lequel la couche nitrurée du second élément annulaire (7b) est formée sur une périphérie intérieure entière de chacun des seconds trous de rivet (11b), et
dans lequel une périphérie intérieure de chacun des premiers trous de rivet (11a) a une surface non nitrurée qui n'est pas formée avec la couche nitrurée du premier élément annulaire (7a).

4. Roulement à billes selon l'une quelconque des revendications 1 à 3, dans lequel le premier élément annulaire (7a) et le second élément annulaire (7b) sont formés de l'un parmi un acier au carbone pour structure de machine, un acier au carbone pour matriçage à froid et un acier inoxydable.

5. Roulement à billes selon l'une quelconque des revendications 1 à 4, dans lequel les rivets (8) sont formés de l'un parmi un acier au carbone pour structure de machine, un acier au carbone pour matriçage à froid et un acier inoxydable.
